# EUROPEAN PATENT APPLICATION

(11) **EP 4 782 309 A1**
(43) Date of publication of application: **29.07.2026**
(21) Application number: 26150975.6
(22) Date of filing: 09.01.2026
(51) Int. Cl.: B62D 6/00, B62D 5/00

(54) **STEERING SYSTEM**

(30) Priority: 24.01.2025 JP 2025010633
(71) Applicant: JTEKT CORPORATION, Kariya-shi, Aichi-ken, 448-8652 (JP)
(72) Inventor: MIYAKE, Junya, Kariya-shi, Aichi-ken, 448-8652 (JP); NAMIKAWA, Isao, Kariya-shi, Aichi-ken, 448-8652 (JP); YOSHIDA, Kenji, Kariya-shi, Aichi-ken, 448-8652 (JP); YOKOTA, Shuta, Toyota- shi, Aichi-ken, 471-8571 (JP)
(74) Representative: Winter, Brandl - Partnerschaft mbB

(57) **Abstract**

A steer-by-wire type steering system includes an operation unit including an operation member and a reaction force applying device, a steering unit configured to steer at least one wheel, and a controller. The controller includes a plurality of control modes each having a different steering characteristic. The controller is configured to change the steering characteristic by executing a plurality of characteristic change controls each configured to change a predetermined control parameter related to a control of the reaction force applying device and/or the steering unit. In response to switching of the control mode, the controller is configured to execute, when it is determined that a vehicle state satisfies a predetermined condition, one or more of the plurality of characteristic change controls, and execute, regardless of whether the vehicle state satisfies the predetermined condition, another one or more of the plurality of characteristic change controls.

## Description

### TECHNICAL FIELD

The present disclosure relates to a steering system of a vehicle.

### BACKGROUND ART

In some steering systems of vehicles, a plurality of control modes (drive modes) having different operation characteristics are set. In such a steering system, the control modes are switched according to the operation of the driver. For example, in the electric power steering apparatus disclosed in WO 2011/048772, when the control mode is switched, the switching period for gradually changing the control value is set to be different according to the control modes before and after the switching. This makes it easy for the driver to feel the switching of the control modes.

### SUMMARY

On the other hand, a steer-by-wire type steering system is a system in which an operation unit operated by a driver and a steering unit for steering wheels are mechanically separated. In such a steer-by-wire type steering system, it is an object of the present disclosure to make the driver more effectively feel the switching of control modes.

An aspect of the present disclosure relates to a steer-by-wire type steering system including an operation unit including an operation member for steering operation by a driver and a reaction force applying device for applying an operation reaction force to the operation member, a steering unit mechanically separated from the operation unit and configured to steer at least one wheel in accordance with a supplied steering current, and a controller configured to control the steering unit and the reaction force applying device based on an operation signal related to an operation of the operation member received from the operation unit and a steering angle signal related to an actual steering angle of the wheel received from the steering unit. The controller includes a plurality of control modes each having a different steering characteristic. The controller is configured to change, in response to switching of the control mode, the steering characteristic by executing a plurality of characteristic change controls each configured to change a predetermined control parameter related to a control of the reaction force applying device and/or the steering unit. In response to the switching of the control mode, the controller is configured to execute, when it is determined that a vehicle state satisfies a predetermined condition, one or more of the plurality of characteristic change controls, and execute, regardless of whether the vehicle state satisfies the predetermined condition, another one or more of the plurality of characteristic change controls.

According to the configuration of the present disclosure, when the control mode is switched by the driver, at least one characteristic change control is executed without determining whether the vehicle state satisfies the predetermined condition. That is, at least one characteristic related to the steering starts to change responsively to the switching operation of the control mode by the driver. Thus, the driver can feel the switching of the control mode more strongly.

### BRIEF DESCRIPTION OF DRAWINGS

The objects, features, advantages, and technical and industrial significance of the present disclosure will be better understood by reading the following detailed description of an embodiment, when considered in connection with the accompanying drawings, in which;
FIG. 1 is a block diagram of a steering system according to the present embodiment;
FIG. 2 is a time chart for explaining an example of switching a control mode according to the present embodiment;
FIG. 3 is a flow chart showing a flow of switching the control mode according to the present embodiment.

### DESCRIPTION

A steering system 1 according to the present embodiment is mounted on an electric vehicle as an example. Communication in the vehicle is performed by, for example, CAN (Car Area Network or Controllable Area Network), FlexRay, or Ethernet.

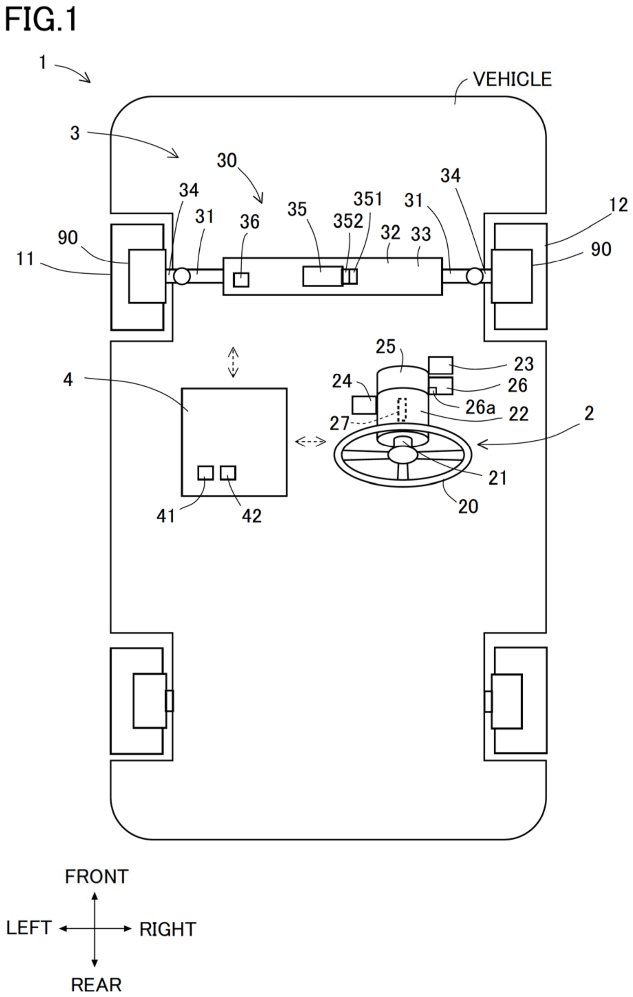

As shown in FIG. 1, the steering system 1 includes an operation unit 2, a steering unit 3, and a controller 4. The operation unit 2 according to the present embodiment includes an operation member 20, a steering shaft 21, a steering column 22, an operation amount sensor 23, an operation torque sensor 24, and a reaction force applying device 25.

The operation member 20 is a handle operation member for steering operation by a driver, and is, for example, a steering wheel. It is noted that the shape of the operation member 20 is not limited to a circular shape such as a steering wheel, and may be, for example, a polygonal shape such as a square shape. The operation member 20 is fixed to a distal end of the steering shaft 21. The operation member 20 and the steering shaft 21 are rotatably held on an instrument panel reinforcement by the steering column 22.

The operation amount sensor 23 is a sensor that detects an operation amount (operation angle) of the operation member 20. The operation torque sensor 24 detects an operation torque of the operation member 20. The operation torque sensor 24 detects, for example, a torsion amount of a torsion bar 27 incorporated in the steering shaft 21.

The reaction force applying device 25 applies an operation reaction force to the operation member 20. The reaction force applying device 25 includes a reaction force motor 26 which is an electric motor. The reaction force applying device 25 applies an operation reaction force to the steering operation to the operation member 20 via the steering shaft 21 using the reaction force motor 26 supported by the steering column 22 as a force source. The reaction force applying device 25 has a general structure including a reduction gear and the like. The reaction force motor 26 is provided with a rotation angle sensor 26a.

The steering unit 3 is a device for steering wheels 11 and 12. The steering unit 3 is mechanically separated from the operation unit 2. The steering unit 3 includes a steering rod 31, a housing 32, a rod moving mechanism 33, a steering motor 35, a current sensor 351, a rotation angle sensor 352, and a steering angle sensor 36.

The steering rod 31 is a member whose both ends are respectively connected to right and left steering knuckles 90 through tie rods 34. The housing 32 is a member which supports the steering rod 31 movably left and right and is fixedly held on a vehicle body.

The rod moving mechanism 33 is a mechanism for moving the steering rod 31 left and right using the steering motor 35 as a driving source. The steering motor 35 is an electric motor for steering the wheels 11 and 12. The rod moving mechanism 33 is mainly constituted of a ball screw mechanism including a ball groove screwed on the steering rod 31 and a nut screwed on the ball groove. The steering motor 35 rotates the nut.

The current sensor 351 is a sensor for detecting the current value of a steering current which is a control current inputted to the steering motor 35. The rotation angle sensor 352 is a sensor for detecting the rotation angle of the steering motor 35. The steering angle sensor 36 is a sensor for detecting the steering angle (steering amount) of the wheels 11 and 12. The steering angle sensor 36 detects the amount of movement of the steering rod 31 from a neutral position to the left and right, respectively.

The controller 4 is configured to control the steering unit 3 and the reaction force applying device 25 based on an operation signal regarding the operation of the operation member 20 received from the operation unit 2. The controller 4 is configured to receive from the steering unit 3 a steering angle signal regarding the steering angle of the wheels 11 and 12, that is, a detection value of the steering angle sensor 36. The controller 4 controls the steering unit 3 and the reaction force applying device 25 based on the operation signal and the steering angle signal.

The controller 4 is a computer including one or more processors 41 and one or more memories 42. The computer is also called an electronic control unit (ECU). The controller 4 is communicatively connected to the operation unit 2 and the steering unit 3. The operation unit 2 and the steering unit 3 are electrically connected via a communication line and the controller 4. Thus, the steering system 1 is a steer-by-wire type steering system. It is noted that the controller 4 may be composed of two or more computers connected so as to communicate with each other. For example, the controller 4 may be composed of an operation ECU provided in the operation unit 2 and a steering ECU provided in the steering unit 3.

The controller 4 calculates a steering gear ratio (hereinafter abbreviated as "gear ratio") based on a predetermined gear ratio calculation rule and a vehicle speed. The gear ratio is a ratio of a steering amount (steering angle) of the wheels 11 and 12 to an operation amount (operation angle) of the operation member 20. The gear ratio calculation rule represents a relationship between the vehicle speed and the gear ratio and is, for example, a map. The vehicle speed is calculated based on a detection value of a wheel speed sensor 70 provided on each wheel.

The controller 4 calculates the gear ratio based on the gear ratio calculation rule and the vehicle speed. The gear ratio is variable in accordance with the vehicle speed. In the gear ratio calculation rule, for example, the gear ratio is set to be large at low speed and small at high speed. The controller 4 calculates a target steering angle which is a target value of the steering angles of the wheels 11 and 12 based on the calculated gear ratio, the vehicle speed, the operation signal, and the steering angle signal. The controller 4 supplies a steering current corresponding to the target steering angle to the steering motor 35. The gear ratio and the target steering angle are changed in accordance with the magnitude of the vehicle speed.

There will be described a calculation example of the operation reaction force applied by the reaction force applying device 25. The operation reaction force is calculated based on an angular axial force value and a current axial force value as an example. The controller 4 calculates the angular axial force value based on the vehicle speed and the target steering angle. The angular axial force value is, for example, a force simulating self-aligning torque. When the vehicle speed is equal to or less than a predetermined value, a low-speed angular axial force value, which is an angular axial force value for low speed, is set as the angular axial force value.

In addition to the angular axial force value, the controller 4 calculates the current axial force value based on the change in the steering current. For example, when the vehicle travels on an uneven road surface, changes in the actual steering angle occur, which cause an angular difference between the target steering angle and the actual steering angle. The angular difference causes a change in the steering current. This is because the steering load changes according to the road surface condition. The current axial force value is a value corresponding to the change in the steering current and reflects the road surface condition. The operation reaction force is calculated by mixing the angular axial force value and the current axial force value based on a predetermined or variable mixing ratio.

### CONTROL MODE

A plurality of control modes for realizing different steering characteristics are set in the controller 4. The control mode is also called a drive mode. As an example, a normal mode, a sport mode, and a comfort mode are set in the controller 4 of this embodiment. The control mode is changed according to the operation of the driver (occupant). Each control mode has a different steering characteristic. The steering characteristic is set by a plurality of small characteristics such as a characteristic of an operation reaction force. For example, the steering characteristic is set by a "transmission amount of road surface information", a "magnitude of the operation reaction force with respect to the operation amount of the operation member 20", and a "magnitude of the steering angle of the wheel with respect to the operation amount of the operation member 20".

The controller 4 is configured to change the steering characteristic by executing a plurality of kinds of characteristic change control in response to switching of the control mode. The characteristic change control is a control for changing a predetermined control parameter related to the control of the reaction force applying device 25 and/or the steering unit 3. In other words, the characteristic change control is a control for changing one small characteristic among the plurality of small characteristics constituting the steering characteristic by changing the predetermined control parameter. In the characteristic change control, the controller 4 gradually changes the control parameter to be changed with the passage of time, that is, the controller 4 gradually changes the control parameter. When the characteristic change control is executed, the control parameter to be changed is gradually changed from a set value in the control mode before switching to a set value in the control mode after switching. The period during which the control parameter is gradually changed is also referred to as a gradual change period.

In response to the switching of the control mode, the controller 4 executes one or more kinds of characteristic change control among the plurality of kinds of characteristic change control after determining that the vehicle state satisfies a predetermined condition. Moreover, in response to the switching of the control mode, the controller 4 executes another one or more kinds of characteristic change control different from those described above regardless of whether the vehicle state satisfies the predetermined condition.

The vehicle state is the running state of the vehicle, and is expressed by, for example, a straight traveling state or a turning state in addition to information on a high or low vehicle speed. The predetermined conditions are related to the vehicle speed and the state of turning, for example, "the vehicle speed is equal to or less than a predetermined speed" and/or "the vehicle is traveling straight".

According to the present embodiment, when the control mode is switched by the driver, at least one kind of characteristic change control is executed without determining whether or not the vehicle state satisfies the predetermined conditions. That is, at least one small characteristic starts to change with good response to the control mode switching operation. As a result, the driver can feel the control mode switching more strongly. In addition, the small characteristic requiring vehicle stability for the characteristic change is executed after the vehicle state is confirmed. In this way, the characteristic change control not requiring the confirmation of the vehicle state is executed in accordance with the mode switching operation of the driver, so that the driver can feel the control mode switching more strongly.

Hereinafter, the characteristic change control of this embodiment will be described with specific examples. In the controller 4 of this embodiment, three types of characteristic change control are set: a transmission change control, a reaction force change control, and a gear ratio change control.

### TRANSMISSION CHANGE CONTROL

The transmission change control is a control for gradually changing a control parameter related to a transmission amount of road surface information to the operation member 20. The transmission change control is also a control for gradually changing a predetermined control parameter related to the control of the reaction force applying device 25 so as to match the control mode after switching. In the control for gradually changing the control parameter (gradual change mechanism), a rate limiter may be used.

The control parameters to be changed in the transmission change control are an extraction frequency band and a filter gain. Changes in the extraction frequency band and the filter gain affect the current axial force value in the operation reaction force. As described above, the steering current changes in accordance with the unevenness of the road surface. The time change of the steering current appears as a waveform, that is, a signal with a frequency. The extraction frequency band means a frequency band of a signal to be extracted as road surface information out of the signal of the steering current. A band-pass filter, for example, is used to extract the signal of the extraction frequency band.

The filter gain is a gain multiplied by the signal of the extraction frequency band. The greater the filter gain, the greater the degree of reflection of the road surface information on the operation reaction force. That is, the greater the filter gain, the greater the amount of transmission of the road surface information to the operation member 20. The controller 4 sets the operation reaction force based on the signal obtained by multiplying the signal of the extraction frequency band by the filter gain, and transmits the road surface information to the operation member 20.

In the sport mode, compared with the normal mode, for example, a relatively wide extraction frequency band is set so that more road surface information is reflected on the operation reaction force, and a relatively large filter gain is set so that more road surface information is transmitted to the operation member 20. In the comfort mode, compared with the normal mode, for example, a relatively narrow extraction frequency band is set so that less road surface information is reflected on the operation reaction force, and a relatively small filter gain is set so that less road surface information is transmitted to the operation member 20. In the transmission change control, the controller 4 gradually changes the extraction frequency band and the filter gain toward the set value of the control mode after switching.

### REACTION FORCE CHANGE CONTROL

The reaction force change control is a control for gradually changing a control parameter related to the application amount of the operation reaction force with respect to the operation amount of the operation member 20. The reaction force change control is a control for gradually changing a predetermined control parameter related to the control of the reaction force applying device 25 so as to match the control mode after switching. The reaction force change control can also be called an operation feeling change control.

The control parameter to be changed in the reaction force change control is an assist gain which is a gain used in the calculation of the operation reaction force. The larger the assist gain is, the smaller the operation reaction force becomes. The assist gain can also be said to be a degree to reduce the operation reaction force. In the reaction force change control, the assist gain in the operation reaction force is changed in accordance with the control mode. In the sport mode, a smaller assist gain is set so as to provide, for example, a heavier operation feeling as compared with the normal mode. In the comfort mode, a larger assist gain is set so as to provide, for example, a lighter operation feeling as compared with the normal mode. In the reaction force change control, the controller 4 gradually changes the assist gain as the control parameter to be changed toward the set value of the control mode after switching.

### GEAR RATIO CHANGE CONTROL

The gear ratio change control is a control for gradually changing a control parameter related to the gear ratio which is a ratio of the steering angles of the wheels 11 and 12 with respect to the operation amount of the operation member 20. The gear ratio change control is a control for gradually changing a predetermined control parameter related to the control of the steering unit 3 so as to match the control mode after switching.

The gear ratio is set, for example, by a map such that when the vehicle speed and the operation amount of the operation member 20 are inputted, the corresponding gear ratio is outputted. The control parameter in the gear ratio change control can be said to be the gear ratio (output value) in the map. The gear ratio change control can be said to be the control for gradually changing the map. When the steering angle is increased with respect to the operation in the same situation, it means that the reaction of the steering to the operation is quickened, that is, the operation feeling becomes quick. On the contrary, when the steering angle is decreased with respect to the operation in the same situation, it means that the reaction of the steering to the operation is slowened, that is, the operation feeling becomes slow.

In the sport mode, a relatively large gear ratio is set so that, for example, the operation feeling becomes more quick as compared with the normal mode. In the comfort mode, a relatively small gear ratio is set so that, for example, the operation feeling becomes slower as compared with the normal mode. In the gear ratio change control, the controller 4 gradually changes the gear ratio toward the set value of the control mode after switching.

### EXAMPLE OF SWITCHING THE CONTROL MODE

In this example, when the control mode is switched, the transmission change control is executed regardless of whether the vehicle state satisfies the predetermined condition. On the other hand, when the control mode is switched, the reaction force change control and the gear ratio change control are executed after it is determined that the vehicle state satisfies the predetermined condition. The predetermined condition includes a first predetermined condition set for the reaction force change control and a second predetermined condition set for the gear ratio change control.

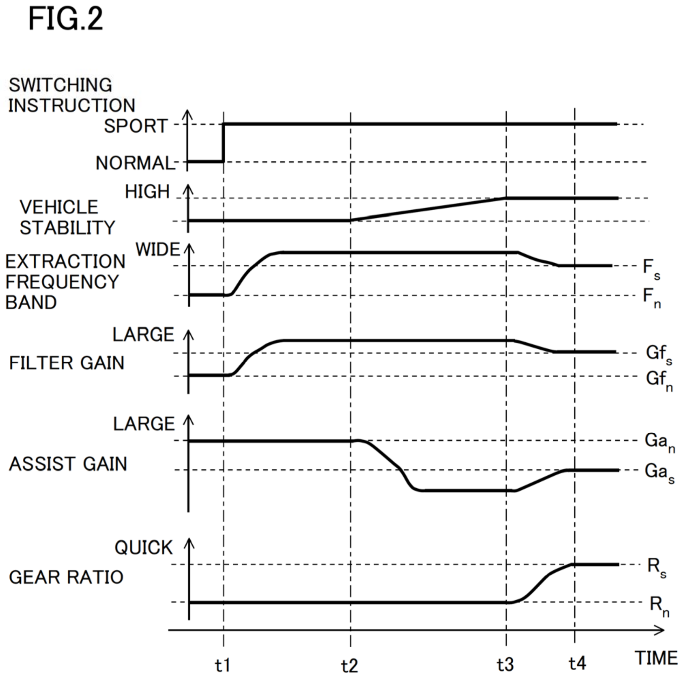

As shown in FIG. 2, when switching of the control mode from the normal mode to the sport mode is instructed by the driver's operation, the transmission change control is executed first. Since the influence of the transmission change control on the vehicle stability is extremely small, the transmission change control is executed regardless of the vehicle state. As a result, when switching of the control mode is instructed at time t1, the transmission change control is immediately started, and the extraction frequency band is gradually widened and the filter gain is gradually increased.

The values of the control parameters corresponding to the control modes are referred to as "set values". For example, the set values of the control parameters corresponding to normal mode are referred to as normal set values Fn, Gfn, Gan, and Rn, the set values of the control parameters corresponding to sport mode are referred to as sport set values Fs, Gfs, Gas, and Rs, and the set values of the control parameters corresponding to comfort mode are referred to as comfort set values Fc, Gfc, Gac, and Rc. When each control parameter changes from the normal set value to the sport set value, the control mode is completely switched from the normal mode to the sport mode.

In the transmission change control of this example, the control parameter is set so as to temporarily overshoot the set value of the control mode after switching. The overshoot amount is set to a predetermined amount. In the transmission change control, the controller 4 makes the extraction frequency band wider than the sport set value Fs and the filter gain larger than the sport set value Gfs. As a result, the driver can temporarily strongly feel the switching of the control mode. The controller 4 maintains each control parameter at the overshoot value for a predetermined period or until a certain condition is satisfied. The controller 4 gradually changes the overshoot value to the sport set values Fs and Gfs in synchronization with the completion of the other characteristic change control, for example. As a result, the target set value can finally be realized.

The reaction force change control is executed after it is determined that the vehicle state satisfies the first predetermined condition. Similarly to the above, the reaction force change control is also set so as to temporarily overshoot the set value Gas of the control mode after switching. The gear ratio change control is executed after it is determined that the vehicle state satisfies the second predetermined condition. The second predetermined condition is set to a condition that requires vehicle stability higher than that of the first predetermined condition. The vehicle stability is higher as the vehicle speed decreases, for example. Further, assuming that the steering angle when the vehicle is traveling straight is 0 degrees, the vehicle stability is higher as the steering angle decreases, that is, the vehicle stability is higher in the straight traveling state than in the turning state. For example, when the vehicle stability is expressed numerically as the degree of stability, the numerical value is higher as the vehicle speed decreases and is higher as the steering angle decreases. It is noted that, in this disclosure, it is assumed that the vehicle is moving forward.

The first predetermined condition is set to, for example, "when the vehicle is travelling straight, the vehicle speed is equal to or less than the predetermined high speed" and "when the vehicle is turning, the vehicle speed is equal to or less than the predetermined low speed and the steering angle is equal to or less than the predetermined angle" (the predetermined high speed > the steady speed > predetermined low speed). The second predetermined condition is set to, for example, "the vehicle is not turning and the vehicle speed is below the steady speed. It should be noted that the vehicle is not in specific states is added to each predetermined condition. Examples of the specific states include a state in which the vehicle is moving backward, a state in which the wheels are slipping, or a state in which the vehicle is suddenly decelerating.

According to the example shown in FIG. 2, at time t1, when an instruction to switch the control mode is issued, the vehicle is turning in a steady speed range and the vehicle stability is relatively low. At this time, the transmission change control is started without determining the vehicle state, and at the same time, comparison between the vehicle state and the predetermined conditions is executed. Thereafter, the steering angle of the vehicle gradually decreases, and at time t2, the first predetermined condition is satisfied, and the reaction force change control is executed. Thereafter, at time t3, the vehicle is in a state of traveling straight at a steady speed of, for example, 50 km/h, and the second predetermined condition is satisfied, and the gear ratio change control is executed.

When the gradual change of the gear ratio by the gear ratio change control is started at time t3, the gradual change of the set value is started to eliminate the overshoot in the transmission change control and the reaction force change control in conjunction with the gradual change of the gear ratio. The controller 4 synchronizes the gradual change period of the reaction force change control after the overshoot with the gradual change period of the gear ratio change control (from time t3 to t4). That is, the controller 4 synchronizes the completion of the gear ratio change control with the completion of the reaction force change control. As a result, the disturbance of the balance between the gear ratio and the operation reaction force due to the gradual change of the gear ratio is suppressed. At time t4, the control mode is completely switched from the normal mode to the sport mode. The period from time t1 to time t4 can be said to be the control mode switching period. In the present example, the transmission change control is started, then the reaction force change control is started, then the gear ratio change control is started, and then all the characteristic change controls are completed at the same timing.

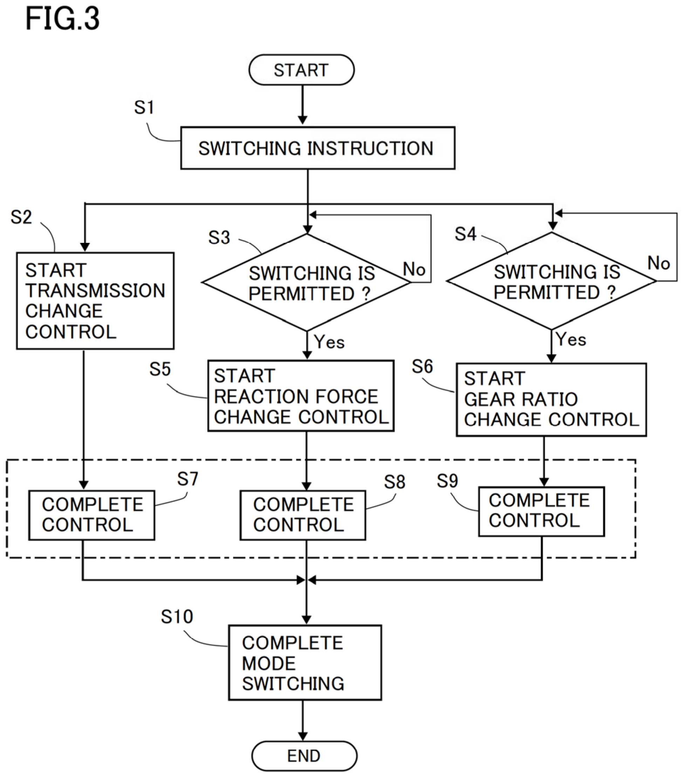

As shown in FIG. 3, upon receiving the control mode switching instruction (S1), the controller 4 immediately executes the transmission change control (S2) and simultaneously determines whether or not the execution of the specific characteristic change control is permitted. As timing arbitration, the controller 4 determines whether or not the execution of the reaction force change control is permitted (S3). That is, the controller 4 determines whether or not the vehicle state satisfies the first predetermined condition. At the same time, the controller 4 determines whether execution of the gear ratio change control is permitted as timing arbitration (S4). That is, the controller 4 determines whether or not the vehicle state satisfies the second predetermined condition.

If the vehicle state satisfies the first predetermined condition (S3: Yes), the controller 4 starts the reaction force change control (S5). If the vehicle state satisfies the second predetermined condition (S4: Yes), the controller 4 starts the gear ratio change control (S6). If the vehicle state satisfies the second predetermined condition when receiving the switching instruction, the reaction force change control and the gear ratio change control may be started simultaneously.

The controller 4 synchronizes the completion timing of the plurality of characteristic change controls (S7, S8, S9). The plurality of characteristic change controls are executed in conjunction with each other. It is noted that the completion timing of each characteristic change control may be earlier or later within a range that does not cause a problem with vehicle stability. In addition, the completion of the transmission change control may not be synchronized with other characteristic change controls. In all the characteristic change controls, when the control parameter becomes the set value of the control mode after switching, the switching of the control mode is completed (step 10). As described above, the change of the control parameters that do not hinder vehicle stability are executed immediately after the switching instruction, so that the mode change is easily transmitted to the driver.

### OTHER

The present invention is not limited to the above embodiments. For example, the reaction force change control may be executed without determining the vehicle state in the same manner as the transmission change control. Further, the characteristic change control may be a control for changing a characteristic (function) other than the above concerning the steering characteristic. A control mode other than the above may be set in the controller 4. In addition to the above, the techniques of the present disclosure can be implemented in various forms with various modifications and improvements based on the knowledge of a person skilled in the art.

## Claims

1. A steer-by-wire type steering system comprising:
an operation unit (2) including an operation member (20) for steering operation by a driver and a reaction force applying device (25) for applying an operation reaction force to the operation member (20),
a steering unit (3) mechanically separated from the operation unit (2) and configured to steer at least one wheel (11,12) in accordance with a supplied steering current, and
a controller (4) configured to control the steering unit (3) and the reaction force applying device (25) based on an operation signal related to an operation of the operation member (20) received from the operation unit (2) and a steering angle signal related to an actual steering angle of the wheel (11,12) received from the steering unit (3),
wherein the controller (4) includes a plurality of control modes each having a different steering characteristic,
wherein the controller is (4) configured to change, in response to switching of the control mode, the steering characteristic by executing a plurality of characteristic change controls each configured to change a predetermined control parameter related to a control of the reaction force applying device (25) and/or the steering unit (3), and
wherein, in response to the switching of the control mode, the controller (4) is configured to:
execute, when it is determined that a vehicle state satisfies a predetermined condition, one or more of the plurality of characteristic change controls, and
execute, regardless of whether the vehicle state satisfies the predetermined condition, another one or more of the plurality of characteristic change controls.

2. The steering system according to claim 1,
wherein the plurality of characteristic change controls includes a transmission change control in which the control parameter related to a transmission amount of road surface information to the operation member (20) is gradually changed and a gear ratio change control in which the control parameter related to a gear ratio which is a ratio of the steering angle of the wheel (11,12) with respect to an operation amount of the operation member (20) is gradually changed, and
wherein the controller (4) is configured to:
execute, when it is determined that the vehicle state satisfies the predetermined condition, the gear ratio change control, and
execute, regardless of whether the vehicle state satisfies the predetermined condition, the transmission change control.

3. The steering system according to claim 2,
wherein the plurality of characteristic change controls includes a reaction force change control in which the control parameter related to an application amount of the operation reaction force with respect to the operation amount of the operation member (20) is gradually changed, and
wherein the controller (4) is configured to synchronize completion of the gear ratio change control and completion of the reaction force change control.

4. The steering system according to claim 3,
wherein the predetermined condition includes a first predetermined condition set for the reaction force change control and a second predetermined condition set for the gear ratio change control, the second condition being a condition that indicates vehicle stability higher than that of the first predetermined condition, and
wherein the controller (4) is configured to:
execute the reaction force change control when it is determined that the vehicle state satisfies the first predetermined condition, and
execute the gear ratio change control when it is determined that the vehicle state satisfies the second predetermined condition.

5. The steering system according to claim 3 or 4,
wherein the controller (4) is configured to gradually change the control parameter so that the control parameter temporally overshoot a set value of a switched control mode in the transmission change control and/or the reaction force change control, the switched control mode being a control mode that has been changed from the previous control mode, the set value being a value corresponding to the switched control mode.
